# FASCICULE DE BREVET EUROPEEN

(11) **EP 4 077 903 B1**
(45) Date de publication et mention de la délivrance du brevet: **02.10.2024**
(21) Numéro de dépôt: 20845594.9
(22) Date de dépôt: 16.12.2020
(51) Int. Cl.: F02K 1/72, F02K 1/76

(54) **INVERSEUR DE POUSSÉE AVEC SYSTÈME D'ACTIONNEMENT ANTI-FLAMBAGE**
SCHUBUMKEHRER MIT KNICKSCHUTZBETÄTIGUNGSSYSTEM
THRUST REVERSER WITH ANTI-BUCKLING ACTUATING SYSTEM

(30) Priorité: 19.12.2019 FR 1914901
(43) Date de publication de la demande: 26.10.2022
(73) Titulaire: Safran Nacelles, 76700 Gonfreville l'Orcher (FR)
(72) Inventeur: CAZUC, Xavier, 77550 MOISSY CRAMAYEL (FR); DUTOT, Vincent, 77550 MOISSY CRAMAYEL (FR); PASCAL, Sébastien Laurent Marie, 77550 MOISSY CRAMAYEL (FR); RIQUIER, Stephane, 77550 MOISSY CRAMAYEL (FR); BOILEAU, Patrick André, 77550 MOISSY CRAMAYEL (FR); JOURDAN, Fabien, 77550 MOISSY CRAMAYEL (FR)
(74) Mandataire: Germain Maureau
(86) Numéro de dépôt international: PCT/FR2020/052468
(87) Numéro de publication internationale: WO 2021/123621

(56) Documents cités:
- FR-A1- 2 907 512
- US-A- 3 532 275
- US-A1- 2010 089 029
- US-A1- 2017 226 962

## Description

La présente invention concerne une nacelle de turboréacteur comprenant un inverseur de poussée destiné à équiper une telle nacelle.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air primaire chaud issu de la chambre de combustion du turboréacteur, et un flux secondaire d'air froid qui circule à l'extérieur du turboréacteur à travers un passage annulaire, également appelé veine d'air, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur de poussée obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend une structure fixe et une structure mobile déplaçable entre, d'une part, une position déployée, dite de jet inversé, dans laquelle elle ouvre dans la nacelle un passage destiné au flux dévié, et d'autre part, une position d'escamotage, dite de jet direct, dans laquelle elle ferme ce passage. Cette structure mobile peut remplir une fonction de déviation ou simplement d'activation d'autres moyens de déviation.

On connaît ainsi les inverseurs à grilles dans lesquels la réorientation du flux d'air est effectuée par des grilles de déviation, la structure mobile consistant alors en un capot mobile coulissant visant à découvrir ou recouvrir ces grilles, la translation de ce capot mobile active alors le déploiement de volets d'inversion de poussée permettant la fermeture de la veine en aval des grilles de manière à optimiser la réorientation du flux froid. Ce déplacement du capot mobile s'effectue aux moyens d'actionneurs selon un axe longitudinal parallèle à l'axe de la nacelle. Chaque actionneur est relié, d'une part, à un point fixe de la structure fixe et, d'autre part, à un point fixe de la structure mobile.

Le capot mobile est soumis à des efforts de directions longitudinales et radiales repris par la structure fixe via les actionneurs. Lors du déplacement du capot mobile vers sa position de jet inversé, chaque actionneur est allongé linéairement pour accompagner le déplacement du capot mobile. Lors du déplacement de l'actionneur vers sa position de jet inversé et particulièrement en fin de course, un blocage de l'inverseur de poussée peut intervenir au niveau des actionneurs ou encore au niveau des rails et glissières entre la structure fixe et la structure mobile. Un tel blocage de l'inverseur de poussée entraîne un blocage de l'allongement linéaire des actionneurs. Dans ce cas, l'énergie appliquée à l'inverseur provoque un moment fléchissant pouvant déformer radialement, par rapport à leur axe, les actionneurs ainsi soumis au flambage.

Des solutions consistent à renforcer structurellement ces actionneurs en augmentant leur section afin qu'ils puissent supporter une flexion prédéterminée. Ces solutions entraînent malheureusement une augmentation de masse de l'inverseur de poussée.

Le document FR 2 978 800 A1 divulgue une nacelle comprenant un inverseur de poussée tel que décrit précédemment et où le capot mobile est déplacé en translation par l'intermédiaire d'actionneurs linéaires assurant à la fois le déplacement du capot mobile et le déploiement ou la rétractation des volets d'inversion de poussée.

A la différence des configurations précitées d'inverseurs de poussée, chaque actionneur traverse par ailleurs un ajour formé dans un cadre arrière de la structure fixe.

Si l'ajour du cadre arrière de la structure fixe permet de circonscrire le déplacement radial de l'actionneur par rapport à son axe, cela n'empêche ni la dégradation de l'actionneur, ni la propagation des vibrations mécaniques, générées par le contact répété entre celui-ci et la structure fixe. De plus, cette architecture impose de dimensionner la structure de cadre arrière pour permettre l'intégration des actionneurs.

Le document FR 2907 512 A1 propose de limiter le phénomène de flexion de l'actionneur à l'aide d'une glissière solidaire de la structure mobile et accompagnant le guide d'une tige d'entraînement de l'actionneur par rapport à un corps de l'actionneur.

L'utilisation d'un tel système « tige d'entraînement - glissière » impose une intégration à l'inverseur de poussée encombrante entraînant également une augmentation de la traînée et de la masse de l'inverseur. Par ailleurs, un tel système empêche la rétractation complète de la tige dans le corps de l'actionneur et présente donc l'inconvénient de prévoir des actionneurs de plus grande longueur, ce qui a un impact sur la dimension axiale du capot mobile. Par ailleurs, un tel système n'empêche pas le corps des actionneurs de subir un effort de flambage par le flux d'inversion. Il est donc nécessaire d'augmenter la section de la structure de ces actionneurs, ce qui augmente la masse de l'ensemble.

D'autres inverseurs de poussée sont connus tel que celui du document US 2017/226962 A1 par exemple et d'autres systèmes d'actionnement sont connus tel que celui du US 2010/089029 A1 par exemple.

L'invention a pour but de proposer un inverseur de poussée pour nacelle d'aéronef à turboréacteur comportant un système de limitation du déplacement des actionneurs présentant une intégration simplifiée tout en permettant une réduction de la traînée et de la masse de l'inverseur.

A cet effet, l'invention propose un inverseur de poussée pour nacelle d'aéronef à turboréacteur comprenant :
- une structure fixe,
- une structure mobile,
- un actionneur s'étendant selon un axe principal et relié par une première liaison à la structure fixe et par une deuxième liaison à la structure mobile pour le déploiement de la structure mobile entre une position de jet direct et une position de jet inversé,

l'actionneur étant en outre relié à la structure fixe par une troisième liaison disposée longitudinalement entre la première liaison et la deuxième liaison,
caractérisé en ce que:
   l'axe de la troisième liaison est excentré radialement dudit axe principal,
   et en ce que la troisième liaison autorise un déplacement prédéterminé de l'actionneur par rapport à la structure fixe.

La configuration de l'inverseur de poussée selon l'invention permet de limiter le déplacement de l'actionneur radialement par rapport à son axe de sorte que le moment fléchissant appliqué à l'actionneur autour d'un axe perpendiculaire à son axe principal est fortement réduit. En effet, l'utilisation d'une troisième liaison entre l'actionneur et la structure fixe qui soit déportée par rapport à l'axe principal de l'actionneur permet l'absorption par cette liaison d'une grande partie des efforts transmis depuis la structure mobile vers la structure fixe via l'actionneur. Il est ainsi possible d'éviter de sur-dimensionner la structure des actionneurs, et d'éviter ainsi la prise de masse et l'augmentation de coût des actionneurs. Par ailleurs, cette solution permet de standardiser l'utilisation d'un plus grand nombre d'applications pour un même actionneur et donc de favoriser le concept de familles de produits.

En outre, le déport de l'axe de la troisième liaison par rapport à l'axe de l'actionneur permet de faciliter l'intégration de cette troisième liaison.

Par ailleurs, l'invention permet de faciliter le montage et le démontage de l'actionneur, contrairement à l'art antérieur connu dans lequel l'actionneur traverse un ajour.

L'axe principal peut être défini par une droite reliant la première liaison et la deuxième liaison.

On comprendra que la troisième liaison forme un système de limitation du déplacement radial de l'actionneur par rapport à son axe principal.

Préférentiellement, la troisième liaison autorise un déplacement de l'actionneur radialement par rapport à l'axe de la troisième liaison.

Le déplacement prédéterminé correspond avantageusement à un déplacement radial de l'actionneur par rapport à l'axe de la troisième liaison sur une distance maximale correspondant à 25% du diamètre extérieur de l'actionneur.

On comprendra que l'axe de la troisième liaison est fixe par rapport à la structure fixe.

Selon une autre caractéristique de l'invention, la troisième liaison comprend des éléments de connexion complémentaires entre l'actionneur et la structure fixe.

Selon un mode de réalisation, les éléments de connexion complémentaires sont configurés pour permettre le déplacement prédéterminé.

Selon un mode de réalisation, l'élément de connexion complémentaire de la structure fixe est porté par un moyen de déviation ou une structure de support du moyen de déviation.

Dans ce dernier mode de réalisation, le moyen de déviation est fixe par rapport à la structure fixe, telle une grille de déviation fixe.

Dans le cas de moyen de déviation fixe, une structure de cadre arrière du moyen de déviation est préférentiellement utilisé comme structure de support de l'élément de connexion complémentaire de la structure fixe.

Selon une variante de réalisation, l'élément de connexion complémentaire de la structure fixe est porté par une structure externe de la structure fixe.

Dans cette dernière variante de réalisation, le moyen de déviation est mobile par rapport à la structure fixe, telle une grille de déviation mobile.

La structure externe portant l'élément de connexion complémentaire de la structure fixe peut être préférentiellement un carter de soufflante de la structure externe.

Alternativement, la structure externe portant l'élément de connexion complémentaire de la structure fixe peut être un bord de déviation de la structure externe.

Selon un mode de réalisation de l'invention, les éléments de connexion complémentaires comprennent un pion et une ouverture, le pion étant au moins en partie logé dans l'ouverture.

Le pion peut être intégré ou rapporté à l'élément complémentaire correspondant.

La liaison formée par le pion et l'ouverture permet une mobilité circonscrite de l'actionneur par rapport à la structure fixe autorisant ainsi le déplacement prédéterminé.

En d'autres termes, le pion et l'ouverture forment, entre eux, une butée radiale multidirectionnelle limitant le déplacement radial de l'actionneur par rapport à son axe principal. Il est ainsi possible de reprendre le déplacement radial par rapport à l'axe principal quelque que soit la direction, on limite ainsi le flambage de l'actionneur.

Le pion peut être orienté parallèlement à l'axe principal de l'actionneur.

De façon avantageuse, le pion peut être orienté vers l'aval ou vers l'amont de l'inverseur.

Le déplacement prédéterminé correspond alors à un déplacement radial de l'actionneur par rapport à l'axe de la troisième liaison, l'axe principal pouvant être déplacé de façon parallèle ou non parallèle par rapport à l'axe de la troisième liaison.

Dans une première variante de réalisation, l'élément de connexion complémentaire de la structure fixe comprend l'ouverture et l'élément de connexion complémentaire de l'actionneur comprend le pion.

Dans cette première variante de réalisation, l'axe de la troisième liaison passe par le centre de l'ouverture.

Dans une deuxième variante de réalisation, l'élément de connexion complémentaire de la structure fixe comprend le pion et l'élément de connexion complémentaire de l'actionneur comprend l'ouverture.

Dans cette deuxième variante de réalisation, l'axe de la troisième liaison passe par le centre du pion.

Selon un mode de réalisation, un jeu radial est formé entre l'ouverture et le pion.

Le jeu radial entre l'ouverture et le pion correspond alors au déplacement prédéterminé.

Selon un autre mode de réalisation, l'ouverture et le pion sont ajustés serrés.

Un amortisseur élastique peut être positionné entre l'ouverture et le pion.

L'amortisseur élastique permet l'absorption des contraintes mécaniques transmises depuis la structure mobile vers la structure fixe.

Dans le cas d'un ajustement serré, les propriétés élastiques de l'amortisseur permettent un mouvement dans la liaison entre l'ouverture et le pion correspondant au déplacement prédéterminé.

Dans un mode de réalisation de l'invention, l'axe de l'ouverture et l'axe du pion sont excentrés l'un par rapport à l'autre.

Les axes excentrés de l'ouverture et du pion permettent avantageusement de contraindre le déplacement prédéterminé dans une direction donnée.

Selon une caractéristique de l'invention, l'actionneur comprend un corps et une tige, la tige étant guidée par le corps, l'élément de connexion complémentaire de l'actionneur étant porté par le corps de l'actionneur.

Le diamètre extérieur de l'actionneur est déterminé par le corps du vérin.

Avantageusement, l'élément de connexion complémentaire de l'actionneur est porté à l'extrémité du corps de l'actionneur depuis laquelle s'étend la tige.

Selon un mode de réalisation de l'invention, les éléments de connexion complémentaires de la structure fixe et de l'actionneur comprennent respectivement une surface plane espacées entre elles d'un jeu axial.

Le jeu axial permet d'éviter la transmission des efforts axiaux transmis depuis la structure mobile vers la structure fixe via la troisième liaison de l'actionneur.

Selon un mode de réalisation, les surfaces planes de la structure fixe et de l'actionneur comprennent l'ouverture et le pion.

Selon un mode de réalisation de l'invention, la surface plane de l'élément de connexion complémentaire de l'actionneur est formée par une saillie du corps de l'actionneur.

Selon un mode de réalisation de l'invention, la surface plane de l'élément de connexion complémentaire de la structure fixe est formée par une paroi radiale.

La saillie et la paroi radiale portent ensemble l'ouverture et le pion.

Selon un mode de réalisation de l'invention, la surface plane de l'élément de connexion complémentaire de l'actionneur est formée par deux saillies s'étendant depuis le corps de l'actionneur et la surface plane de l'élément de connexion complémentaire de la structure fixe est formée par deux protubérances en correspondance desdites saillies.

Avantageusement, chaque saillie et sa protubérance complémentaire portent une ouverture et un pion.

Avantageusement, les deux protubérances de ladite paroi radiale délimitent entre elles une forme arrondie creuse.

La forme arrondie creuse permet l'intégration au moins en partie de l'actionneur avec l'élément de connexion complémentaire de la structure fixe. Une telle intégration permet une réduction de l'encombrement de l'inverseur de poussée diminuant ainsi la traînée et la masse de l'inverseur.

L'élément de connexion complémentaire de la structure fixe peut être avantageusement intégré à la structure fixe.

Avantageusement, l'élément de connexion complémentaire de la structure fixe est formé par une cornière.

La présente invention se rapporte également à une nacelle pour aéronef comprenant un tel inverseur de poussée.

On comprendra par le terme « radial » une direction radiale par rapport à un axe longitudinal de la nacelle.

On comprendra par le terme « axial » une direction axiale selon la direction longitudinale de la nacelle.

D'autres caractéristiques et avantages de l'invention apparaîtront à la lecture de la description nullement limitative qui suit et des figures annexées qui illustrent de manière schématique plusieurs modes de réalisation de l'inverseur de poussée et son système d'actionnement selon l'invention.
La figure 1 représente une vue schématique en coupe d'un inverseur connu de l'art antérieur.
La figure 2a représente en partie une structure de cadre arrière.
La figure 2b illustre plus en détail la structure de cadre arrière de la figure 2a équipée d'un actionneur.
La figure 3 illustre une mise en oeuvre de l'invention appliquée à des moyens de déviation fixes.
La figure 4 illustre une mise en oeuvre de l'invention appliquée à des moyens de déviation mobiles.
La figure 5a illustre une vue en perspective détaillée vers l'amont d'une variante du mode de réalisation de la figure 3.
La figure 5b illustre une vue en perspective détaillée vers l'aval du mode de réalisation de la figure 5a.
La figure 5c illustre une vue de face détaillée vers l'aval du mode de réalisation de la figure 5a.
La figure 5d illustre un agrandissement de la troisième liaison P3 représentée à la figure 5a.
La figure 6 illustre une variante de la troisième liaison représentée à la figure 5d.
La figure 7a illustre un arrangement de l'invention appliqué à un moyen de déviation dit fixe.
La figure 7b illustre un autre arrangement de l'invention appliqué à un moyen de déviation dit fixe.
La figure 7c illustre un autre arrangement de l'invention appliqués à un moyen de déviation dit fixe.
La figure 7d illustre un autre arrangement de l'invention appliqués à un moyen de déviation dit fixe.
La figure 8a illustre un arrangement de l'invention appliqué à un moyen de déviation dit mobile.
La figure 8b illustre un autre arrangement de l'invention appliqué à un moyen de déviation dit mobile.
La figure 8c illustre un autre arrangement de l'invention appliqué à un moyen de déviation dit mobile.
La figure 8d illustre un autre arrangement de l'invention appliqué à un moyen de déviation dit mobile.
La figure 9 illustre une variante de réalisation de la figure 3.
La figure 10 illustre une variante de réalisation de la figure 4.

Sur l'ensemble des figures, des références identiques ou analogues désignent des organes ou ensembles d'organes identiques ou analogues.

L'expression « amont » et « avant » seront utilisées indifféremment l'une de l'autre pour désigner l'amont de l'inverseur de poussée et l'expression « aval » et « arrière » seront utilisées indifféremment l'une de l'autre pour désigner l'aval de l'inverseur de poussée.

Les expressions « amont » et « aval » se réfèrent au sens de l'écoulement d'air entrant et sortant d'une nacelle.

De façon générale, une nacelle est destinée à constituer un logement tubulaire pour un turboréacteur double flux et sert à canaliser les flux d'air qu'il génère par l'intermédiaire de aubes d'une soufflante, à savoir un flux d'air chaud (dit flux principal) traversant une chambre de combustion et un flux d'air froid (dit flux secondaire) circulant à l'extérieur du turboréacteur.

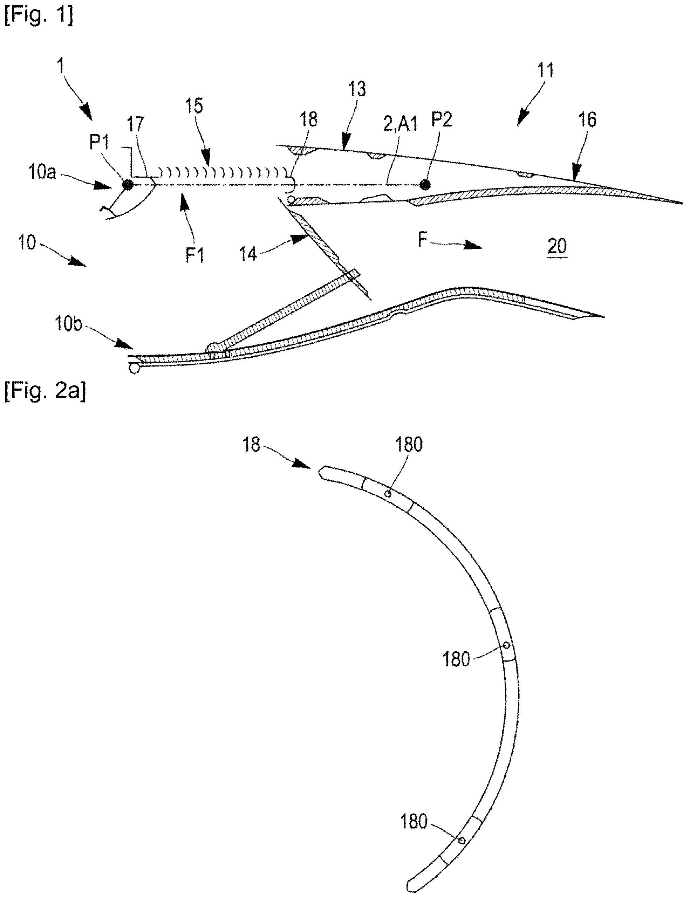

Cette nacelle comprend une section amont formant une entrée d'air, une section médiane entourant la soufflante du turboréacteur et une section aval 1 prolongeant la section médiane et entourant le turboréacteur. On a représenté, sur la figure 1, la partie de la section aval 1 d'une nacelle connue de l'art antérieur.

La section aval 1 comprend un inverseur de poussée de la nacelle, ici représenté dans une configuration de jet inversé. La section aval 1 comprend une structure fixe 10 et une structure mobile 11.

La structure mobile 11 comprend un capot mobile 13, des volets d'inversion 14. On a représenté des moyens de déviation 15 du flux composés d'un assemblage de grilles de déviation 15 fixes par rapport à la structure fixe 10. La structure mobile 11 se termine par une section de tuyère d'éjection 16.

La structure fixe 10 comporte une structure externe 10a et une structure interne 10b de carénage de moteur définissant avec la structure externe 10a et le capot mobile une veine 20 destinée à la circulation du flux d'air froid ou flux secondaire, illustré par la flèche F, dans le cas de la nacelle de turboréacteur double flux telle que présentée ici. La structure externe 10a comprend en outre une structure de cadre avant 17 et une structure de cadre arrière 18 assurant le support des moyens de déviation 15 à la structure fixe 10 de l'inverseur de poussée. La structure de cadre avant 17 et la structure de cadre arrière 18 sont chacune rattachées à la structure externe 10a de la structure fixe 10.

Le capot mobile 13 est destiné à être actionné selon une direction longitudinale de la nacelle entre deux positions extrêmes, à savoir une position de fermeture, dite position de jet direct, dans laquelle le capot mobile 13 vient au contact de la structure externe 10a et où les volets d'inversion14 sont retractés pour assurer la continuité aérodynamique des lignes externes de la section aval 1 permettent la circulation du flux secondaire F dans la veine 20 ; et une position d'ouverture représentée à la figure 1, dite position de jet inversé, dans laquelle il ouvre un passage dans la nacelle, obstrue la veine 20 à l'aide des volet d'inversion 14 déployé et découvre les moyens de déviation 15.

La position de jet inversé du capot mobile permet au flux secondaire F du turboréacteur de s'échapper au moins partiellement, cette portion de flux appelée flux dévié, illustrée par la flèche F1 étant réorientée vers l'avant de la nacelle par les grilles de déviation 15, générant de ce fait une contre-poussée apte à aider au freinage de l'aéronef.

Le déploiement de la structure mobile 11 est réalisé par un ensemble d'actionneurs 2 ici représenté schématiquement par l'axe principal A1 de l'actionneur 2 actionnant le déplacement longitudinal de la structure mobile 11 guidée par rapport à la structure fixe 10 par l'intérmédiaire d'un système de rail/coulisseau (non représenté). L'actionneur 2 assure ainsi la gestion de l'inversion de poussée en pilotant la structure mobile 11 comprenant le capot mobile 13.

Chaque actionneur 2 est relié, d'une part, par une première liaison P1 fixe à la structure fixe 10, ici la structure de cadre avant 17 et, d'autre part, par une deuxième liaison P2 fixe à la structure mobile 11.

Dans la configuration représentée à la figure 1, l'actionneur 2 traverse un ajour formé dans la structure de cadre arrière 18.

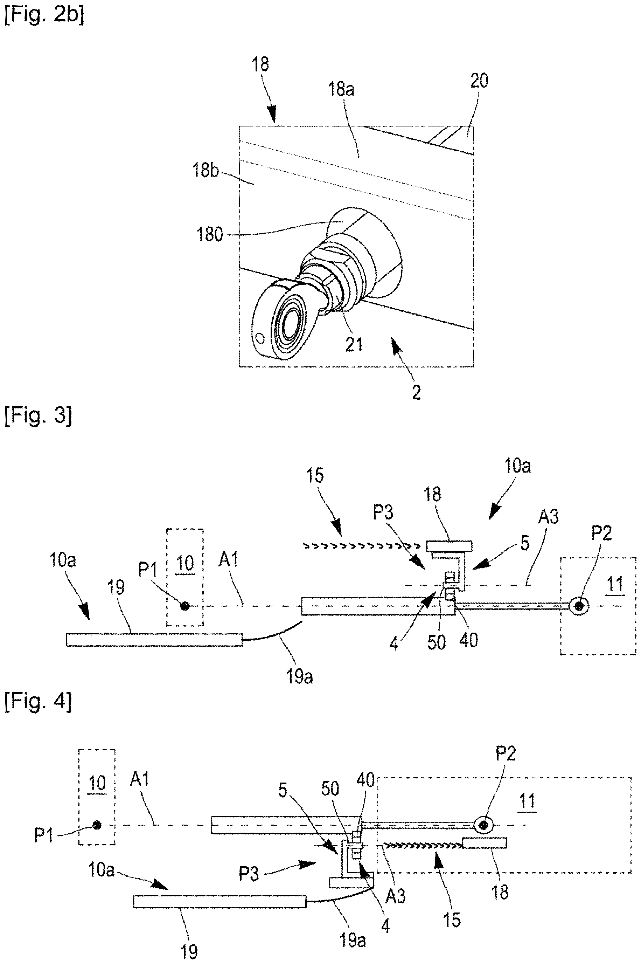

Cette configuration est illustrée plus en détail aux figures 2a et 2b.

La figure 2a représente en partie la structure de cadre arrière 18 prenant la forme d'un anneau circulaire dans lequel sont formés des ajours 180 par lesquels les actionneurs 2 traversent la structure de cadre arrière 18.

La figure 2b illustre plus en détail la structure de cadre arrière 18 comprenant une paroi axiale 18a, ainsi qu'une paroi radiale 18b jointes l'une à l'autre. Les ajours 180 sont formés sur la paroi radiale 18b de la structure de cadre arrière 18.

La figure 2b illustre également le montage d'un actionneur 2 au travers d'un tel ajour 180 de la structure de cadre arrière 18. L'actionneur 2 comprend un corps creux 20 à l'intérieur duquel est logée une tige 21 mobile en translation. Le corps creux 20 est rattaché à son extrémité amont à la structure de cadre avant 17 par la première liaison P1, tandis que la tige 21 est reliée à son extrémité aval libre à la structure mobile 11 par la deuxième liaison P2. La tige 21 traverse ainsi la structure de cadre arrière 18, pour venir se fixer à la structure mobile 11.

Si cette solution permet de limiter le flambage de l'actionneur 2, elle présente l'inconvénient d'une intégration complexe à la structure fixe 10, plus particiulièrement à sa structure de cadre arrière 18. Dans une configuration de lignes aerodynamiques particulièrement fines, cette solution de cadre arrière n'est pas réalisable, vu son encombrement.

L'invention illustrée par les modes de réalisation aux figures 3 et 4, permet, entre autres, de simplifier l'intégration de l'actionneur 2 à la structure fixe 10 tout en limitant les risques de flambage de l'actionneur 2.

La figure 3 illustre une mise en oeuvre de l'invention appliquée à un inverseur de poussée 1 dont les moyens de déviation sont fixes, tels que des grilles de déviation fixes. L'illustration du mode de réalisation de la figure 3 a été simplifiée pour mieux représenter l'invention. En l'occurrence, on a représenté partiellement la structure fixe externe 10a comportant un carter de soufflante 19 se terminant par un bord de déviation 19a et la structure de cadre arrière 18. Le corps 20 de l'actionneur 2 est relié à la structure fixe 10 par la première liaison P1 tandis que la tige 21 est reliée à la structure mobile 11 par la deuxième liaison P2. L'actionneur 2 s'étend suivant l'axe principal A1 coaxial au corps creux 20 et à la tige 21.

Outre la première liaison P1 et la deuxième liaison P2, il est prévu une troisième liaison P3 entre l'actionneur 2 et la structure fixe 10. Cette troisième liaison P3 est disposée longitudinalement entre la première liaison P1 et la deuxième liaison P2.

Tel que représenté, l'axe A3 de la troisième liaison P3 est excentré radialement par rapport à l'axe principal A1. L'axe A3 de la troisième liaison P3 est choisi comme un axe fixe par rapport à la structure fixe 10.

Cette troisième liaison P3 est prévue pour autoriser un déplacement prédéterminé, dans une direction radiale par rapport à l'axe A3, de l'actionneur 2 par rapport à la structure fixe 10. Ce déplacement prédéterminé permet de restreindre l'amplitude de mouvement de l'actionneur 2 lorsque celui-ci est soumis à un phénomène de flambage. Ainsi, la troisième liaison P3 est prévue pour permettre à l'axe principal A1 de l'actionneur 2 et à l'actionneur 2 de se déplacer radialement par rapport à l'axe de la troisième liaison A3.

Tel qu'illustré, la troisième liaison P3 comprend des éléments de connexion complémentaires 4, 5 entre l'actionneur 2 et la structure fixe 10 pour assurer le déplacement prédéterminé.

Les éléments de connexion complémentaires 4, 5 comprennent une ouverture 40 et un pion 50, le pion 50 étant au moins en partie logé dans l'ouverture 40. La liaison formée par le pion 50 et l'ouverture 40 permet une mobilité circonscrite de l'actionneur 2 par rapport à la structure fixe 10 autorisant ainsi le déplacement prédéterminé. En d'autres termes, le déplacement de l'actionneur 2 est circonscrit radialement par rapport à l'axe de la troisième liaison A3.

Dans le cas illustré à la figure 3, l'élément de connexion complémentaire 4 de la structure fixe 10 est porté par une structure de support, ici la structure de cadre arrière 18, du moyen de déviation 15 fixe et l'élément de connexion complémentaire 5 de l'actionneur 2 est porté par le corps 20 de l'actionneur 2.

L'élément de connexion complémentaire 4 de la structure fixe 10 est formé par une cornière depuis laquelle s'étend le pion 50 et l'élément de connexion complémentaire 5 de l'actionneur 2 est formé par une saillie du corps 20 comportant l'ouverture 40.

La figure 4 illustre une mise en oeuvre de l'invention appliquée à un inverseur de poussée 1 dont les moyens de déviation sont mobiles, telles que des grilles de déviation mobiles. L'illustration du mode de réalisation de la figure 4 a également été simplifiée pour mieux représenter l'invention.

Dans ce cas d'application de la figure 4, les moyens de déviation 15 sont des grilles de déviation 15 mobiles par rapport à la structure fixe 10. Les grilles de déviation sont portées par la structure mobile 11. La structure de cadre arrière 18 est alors fixe par rapport à la structure mobile 11 et peut porter entièrement les moyens de déviation 15.

Les éléments de connexion complémentaires 4, 5 représentés à la figure 4 sont pareils à ceux de la figure 3.

A la différence du cas illustré à la figure 3, dans le cas illustré à la figure 4, l'élément de connexion complémentaire 4 de la structure fixe 10 est porté par la structure externe 10a, ici le bord de déviation 19a de la structure fixe 10 ou alternativement le carter de soufflante 19.

Dans la suite de la description, on décrira plus en détail la troisième liaison P3 appliquée au cas d'un inverseur de pousssée 10 à grilles fixes tel que celui illustré à la figure 3. Bien entendu, les caractériques décritent ci-après s'appliquent également à un inverseur de pousée 10 à grilles mobiles.

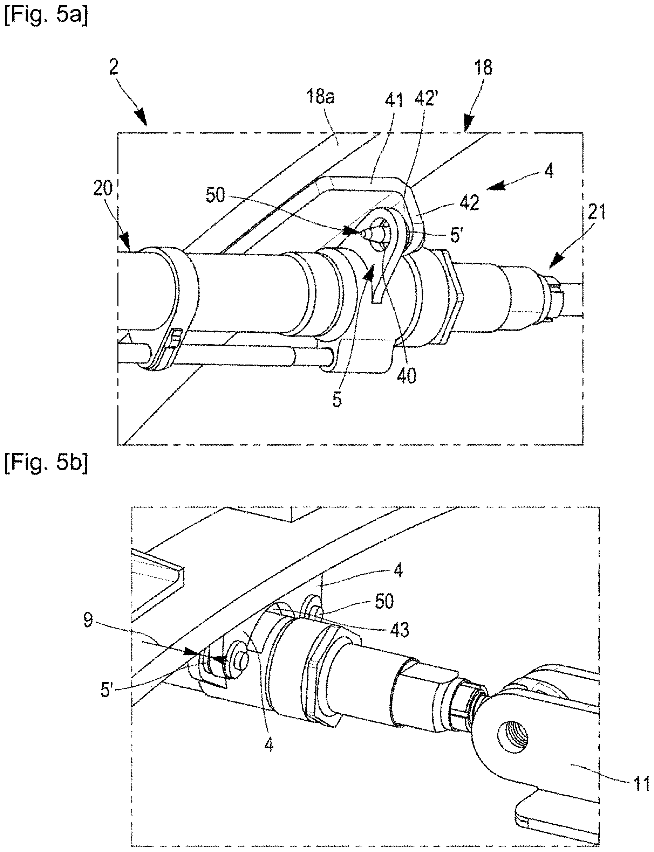

A la figure 5a, on a illustré de façon détaillée une vue vers l'amont d'un mode de réalisation semblable à celui du mode de réalisation représenté à la figure 3. A la différence du mode de réalisation de la figure 3, l'élément de connexion complémentaire 4 de la structure fixe 10 comporte le pion 50 et l'élément de connexion complémentaire 5 de l'actionneur 2 comporte l'ouverture 40.

L'élément de connexion complémentaire 4 de la structure fixe 10 ou cornière 4 comprend une paroi axiale 41 prolongée d'une paroi radiale 42. La paroi axiale 41 est montée fixe sur la structure de cadre arrière 18, par exemple par soudage.

L'élément de connexion complémentaire de l'actionneur 2 ou saillie 5 prend la forme d'une oreille 5.

La paroi radiale 42 et l'oreille 5 comprennent respectivement une surface plane 42', 5' espacées entre elles d'un jeu axial 9. Un tel jeu axial permet d'éviter la transmission des efforts axiaux depuis la structure mobile 11 vers la structure fixe 10 via la troisième liaison P3 de l'actionneur 2. Ces mêmes surfaces planes 42', 5' portent l'ouverture 40 et le pion 50. Plus particulièrement, la surface plane 42' de l'élément de connexion complémentaire 4 de la structure fixe 10 porte le pion 50 et la surface plane 5' de l'élément de connexion complémentaire 5 de l'actionneur 2 porte l'ouverture 40.

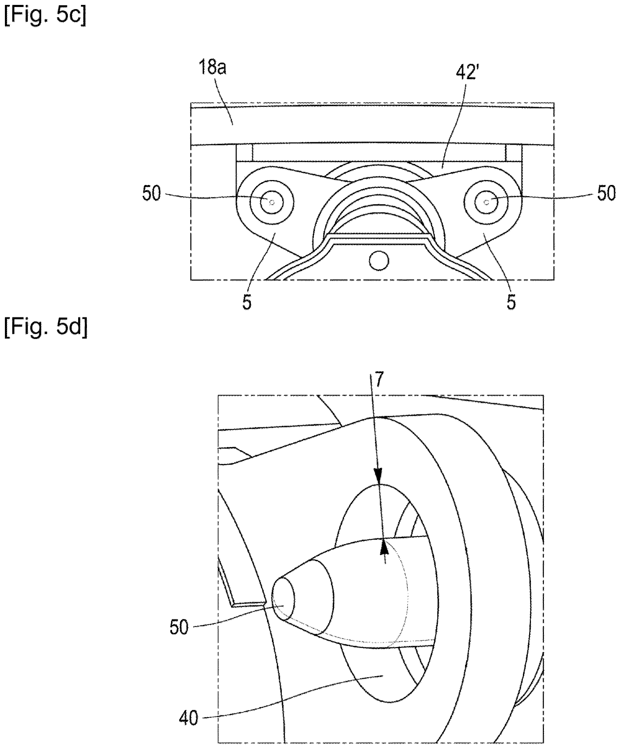

Les figures 5b et 5c représentent différentes vues du mode de réalisation de la figure 5a. La figure 5b représente par ailleurs la deuxième liaison P2 fixe entre la tige 21 de l'actionneur 2 et la structure mobile 11.

Les figures 5b et 5c ensemble illustrent que la surface plane 5' de l'élément de connexion complémentaire 5 de l'actionneur 2 comprend deux saillies 5 en forme d'oreilles s'étendant depuis le corps 20 de l'actionneur 2. Ces saillies 5 peuvent être espacées entre elles d'un angle inférieur à 180°. La surface plane 42' de l'élément de connexion complémentaire 4 de la structure fixe 10 est formée par deux protubérances 4 en correspondance desdites saillies 5. Les deux protubérances 4 de la paroi radiale 42 délimitent entre elles une forme arrondie creuse 43 qui permet l'intégration simplifiée au moins en partie de l'actionneur avec l'élément de connexion complémentaire de la structure fixe. Une telle intégration permet une réduction de l'encombrement de l'inverseur de poussée diminuant ainsi la traînée et la masse de l'inverseur. De façon similaire à ce qui précède, chaque saillie 5 et sa protubérance 4 complémentaire portent une ouverture 40 et un pion 50.

La figure 5d illustre un agrandissement de la troisième liaison P3 représentée à la figure 5a où on a représenté un jeu radial 7 formé entre l'ouverture 40 et le pion 50. Le jeu entre l'ouverture et le pion correspond alors au déplacement prédéterminé.

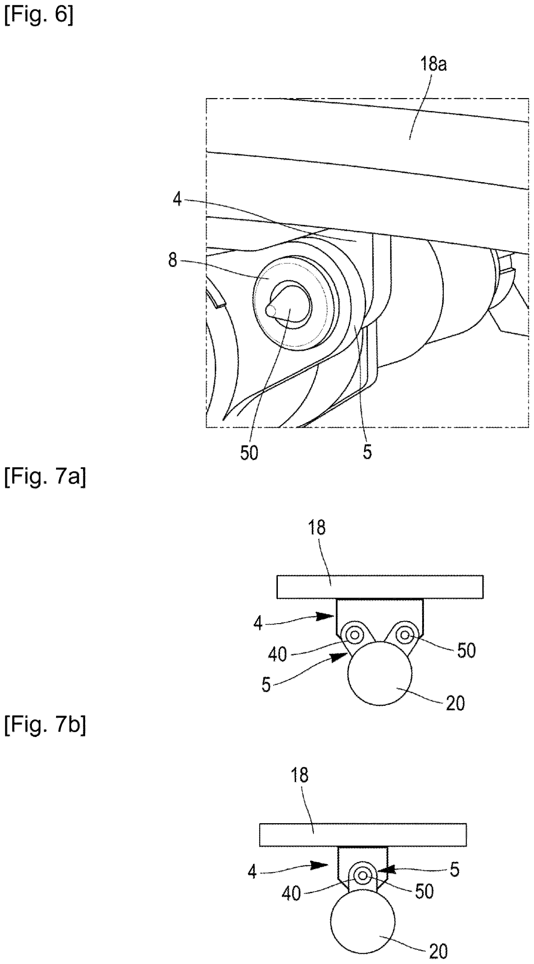

Dans une variante de réalisation illustrée à la figure 6, l'ouverture 40 et le pion 50 sont ajustés serrés.

Dans tous les cas, il peut être prévu un amortisseur élastique 8 prévu entre l'ouverture 40 et le pion 50 pour permettre l'absorption des contraintes mécaniques transmises depuis la structure mobile 11 vers la structure fixe 10. L'amortisseur est ici formé par une bague élastique logée dans l'ouverture 40 et entourant le pion 50.

L'amortisseur élastique 8 peut être rapporté ou intégré à l'ouverture 40 ou au pion 50. L'amortisseur 8 peut être prévu pour assurer l'ajustement serré entre l'ouverture 40 et le pion 50.

Les figures 7a à 7d illustrent différents arrangements de la troisième liaison P3 de l'invention appliqués à un moyen de déviation 15 fixe.

A la figure 7a, on a représenté deux saillies 5 en forme d'oreilles s'étendant depuis le corps 20 de l'actionneur 2 et comportant chacune une ouverture 40 recevant un pion 50 s'étendant depuis une cornière 4 solidaire du cadre arrière 18. Cette configuration permet avantageusement de limiter le déplacement circonférentiel de l'actionneur 2 par rapport à l'axe de la troisième liaison A3 et d'assurer une meilleure reprise des efforts en cas de flambage.

A la figure 7b, on a représenté une seule saillie 5 en forme d'oreille s'étendant depuis le corps 20 de l'actionneur 2 et comportant une ouverture 40 recevant un pion 50 en saillie d'une cornière 4 solidaire du cadre arrière 18. Cette configuration permet avantageusement de réduire la masse des éléments formant la troisième liaison P3 et de faciliter le montage et démontage de l'actionneur 2.

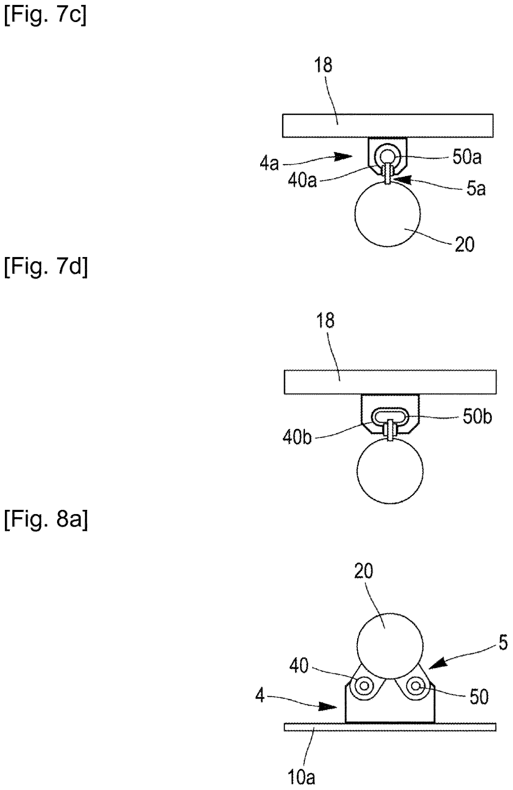

A la figure 7c, l'ouverture 40a est formée sur la cornière 4a solidaire du cadre arrière 18 et le pion 50a s'étend depuis une saillie linéaire 5a solidaire du corps 20 de l'actionneur 2.

Dans les modes de réalisation précédemment illustrés appliqués à un moyen de déviation 15 fixe, l'ouverture 40 et le pion 50 sont de forme complémentaire circulaire. A la figure 7d, à la différence des configurations illustrées précédemment, l'ouverture 40b et le pion 50b sont de forme complémentaire oblongue. Une telle forme oblongue permet une meilleure reprise des efforts en cas de flambage.

Les figures 8a à 8d illustrent différents arrangements de la troisième liaison P3 de l'invention appliqués à un moyen de déviation 15 mobile.

A la figure 8a, on a représenté deux saillies 5 en forme d'oreilles s'étendant depuis le corps 20 de l'actionneur 2 et comportant chacune une ouverture 40 recevant un pion 50 s'étendant depuis une cornière 4 solidaire de la structure externe 10a, par exemple le bord de déviation 19a de la structure fixe 10 ou alternativement le carter de soufflante 19. Cette configuration permet également de limiter le déplacement circonférentiel de l'actionneur 2 par rapport à l'axe de la troisième liaison A3 et d'assurer une meilleure reprise des efforts en cas de flambage.

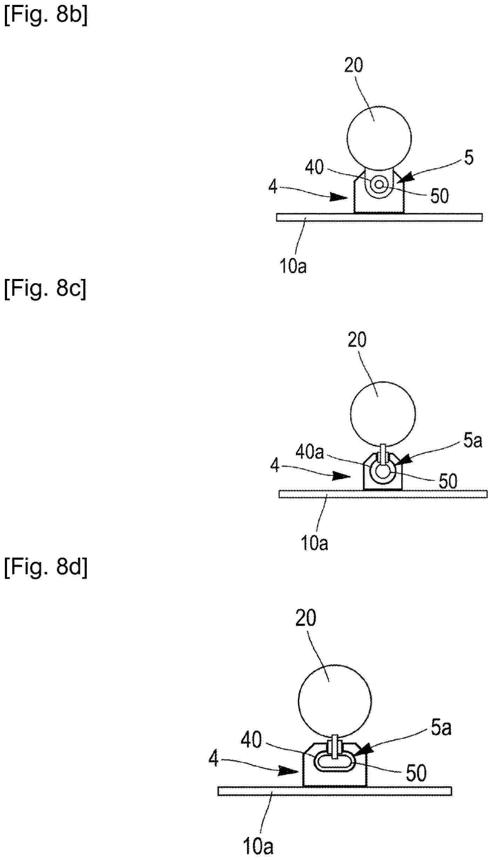

A la figure 8b, on a représenté une seule saillie 5 en forme d'oreille s'étendant depuis le corps 20 de l'actionneur 2 et comportant une ouverture 40 recevant un pion 50 en saillie d'une cornière 4 solidaire de la structure externe 10a. Cette configuration permet également de réduire la masse des éléments formant la troisième liaison P3 et de faciliter le montage et démontage de l'actionneur 2.

A la figure 8c, l'ouverture 40a est formée sur la cornière 4a solidaire de la structure externe 10a et le pion 50a s'étend depuis une saillie linéaire 5a solidaire du corps 20 de l'actionneur 2.

Dans les modes de réalisation précédemment illustrés appliqués à un moyen de déviation 15 mobile, l'ouverture 40 et le pion 50 sont de forme complémentaire circulaire.

A la figure 8d, à la différence des configurations illustrées précédemment, l'ouverture 40b et le pion 50b sont de forme complémentaire oblongue. Une telle forme oblongue permet une meilleure reprise des efforts en cas de flambage.

Bien entendu, dans les différents modes de réalisation décrits précédemment l'agencement de l'ouverture et du pion de la troisième liaison peut être inversé.

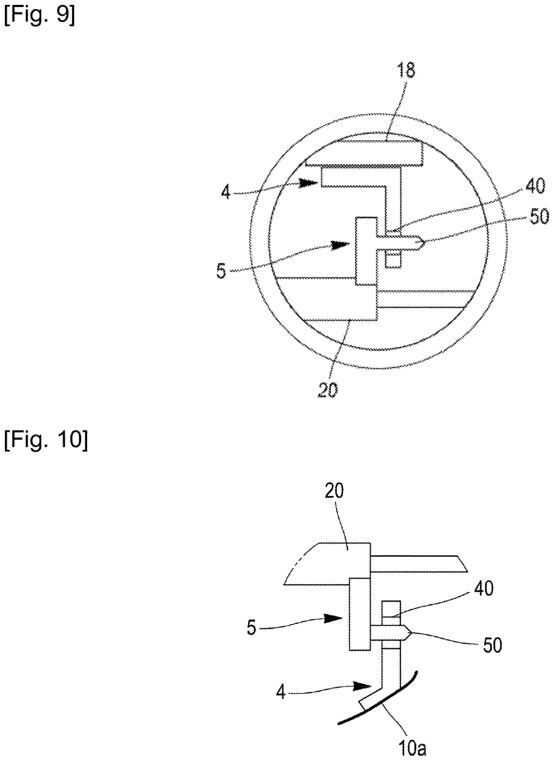

A titre d'exemple, on a représenté à la figure 9, une variante de réalisation du mode de réalisation illustré à la figure 3 où l'élément de connexion complémentaire 5 de l'actionneur 2 comprend le pion 50 et l'élément de connexion complémentaire 4 de la structure fixe 10, ici son cadre arrière 18, comprend l'ouverture 40.

Dans un autre exemple, on a représenté à la figure 10, une variante de réalisation du mode de réalisation illustré à la figure 4 où l'élément de connexion complémentaire 5 de l'actionneur 2 comprend le pion 50 et l'élément de connexion complémentaire 4 de la structure fixe 10, ici la structure externe 10a, par exemple le bord de déviation 19a de la structure fixe 10, comprend l'ouverture 40.

Bien entendu l'exemple de mise en oeuvre évoqué ci-dessus ne présente aucun caractère limitatif et d'autres améliorations et détails peuvent être apportés à la nacelle selon l'invention, sans pour autant sortir du cadre de l'invention où d'autres formes de moyens de déviation peuvent par exemple être réalisées.

On pourra prévoir que l'actionneur 2 peut être un actionneur linéaire simple actionné électriquement, hydrauliquement ou pneumatiquement. Ou encore que cet actionneur 2 peut être attaché à la structure fixe 10 entre deux lignes longitudinales d'attache de moyen de déviation 15.

## Revendications

1. Inverseur de poussée (1) pour nacelle d'aéronef à turboréacteur comprenant :
- une structure fixe (10),
- une structure mobile (11),
- un actionneur (2) s'étendant selon un axe principal (A1) et relié par une première liaison (P1) à la structure fixe (10) et par une deuxième liaison (P2) à la structure mobile (11) pour le déploiement de la structure mobile (11) entre une position de jet direct et une position de jet inversé,
**caractérisé en ce que**:
l'actionneur (2) est en outre relié à la structure fixe (10) par une troisième liaison (P3)
disposée longitudinalement entre la première liaison (P1) et la deuxième liaison (P2), l'axe (A3) de la troisième liaison (P3) est excentré radialement dudit axe principal (A1), et **en ce que** la troisième liaison (P3) autorise un déplacement prédéterminé de l'actionneur (2) par rapport à la structure fixe (10).

2. Inverseur de poussée (1) selon la revendication précédente, **caractérisé en ce que** la troisième liaison (P3) comprend des éléments de connexion complémentaires (4, 5) entre l'actionneur (2) et la structure fixe (10).

3. Inverseur de poussée (1) selon la revendication précédente, **caractérisé en ce que** les éléments de connexion complémentaires (4, 5) comprennent un pion (50) et une ouverture (40), le pion (50) étant au moins en partie logé dans l'ouverture (40).

4. Inverseur de poussée (1) selon la revendication précédente, **caractérisé en ce qu'**un jeu radial (7) est formé entre l'ouverture (40) et le pion (50).

5. Inverseur de poussée (1) selon l'une quelconque des revendications 3 ou 4, **caractérisé en ce que** l'ouverture (40) et le pion (50) sont ajustés serrés.

6. Inverseur de poussée (1) selon l'une quelconque des revendications 3 à 5, **caractérisé en ce qu'**un amortisseur élastique (8) est positionné entre l'ouverture (40) et le pion (50).

7. Inverseur de poussée (1) selon l'une quelconque des revendications 3 à 6, **caractérisé en ce que** le pion (50) est orienté parallèlement à l'axe principal (A1) de l'actionneur (2).

8. Inverseur de poussée (1) selon l'une quelconque des revendications 2 à 7, **caractérisé en ce que** l'élément de connexion complémentaire (4) de la structure fixe (10) est porté par un moyen de déviation (15) ou une structure de support du moyen de déviation.

9. Inverseur de poussée (1) selon l'une quelconque des revendications 2 à 7, **caractérisé en ce que** l'élément de connexion complémentaire (4) de la structure fixe (10) est porté par une structure externe (10a) de la structure fixe (10).

10. Inverseur de poussée (1) selon l'une quelconque des revendications 2 à 9, **caractérisé en ce que** l'actionneur (2) comprend un corps (20) et une tige (21), la tige (21) étant guidée par le corps (20), l'élément de connexion complémentaire (5) de l'actionneur (2) étant porté par le corps (20) de l'actionneur (2).

11. Inverseur de poussée (1) selon l'une quelconque des revendications 2 à 10, **caractérisé en ce que** les éléments de connexion complémentaires (4, 5) de la structure fixe (10) et de l'actionneur (2) comprennent respectivement une surface plane (42', 5') espacées entre elles d'un jeu axial (9).

12. Inverseur de poussée (1) selon la revendication précédente, **caractérisé en ce que** la surface plane (5') de l'élément de connexion complémentaire (5) de l'actionneur (2) est formée par une saillie (5) du corps (20) de l'actionneur (2).

13. Inverseur de poussée (1) selon la revendication 11, **caractérisé en ce que** la surface plane (5') de l'élément de connexion complémentaire (5) de l'actionneur (2) est formée par deux saillies (5) s'étendant depuis le corps (20) de l'actionneur (2) et la surface plane (42') de l'élément de connexion complémentaire (4) de la structure fixe (10) est formée par deux protubérances (4) en correspondance desdites saillies (5).

14. Inverseur de poussée (1) selon l'une quelconque des revendications 11 à 13, **caractérisé en ce que** la surface plane (42') de l'élément de connexion complémentaire (4) de la structure fixe (10) est formée par une paroi radiale (42).

15. Nacelle pour aéronef comprenant un inverseur de poussée (1) selon l'une quelconque des revendications précédentes.

## Patentansprüche

1. Schubumkehrer (1) für eine Gondel eines Flugzeugs mit Strahltriebwerk, der Folgendes umfasst:
- eine feste Struktur (10),
- eine bewegliche Struktur (11),
- ein Stellglied (2), das sich entlang einer Hauptachse (A1) erstreckt und über eine erste Verbindung (P1) mit der festen Struktur (10) und über eine zweite Verbindung (P2) mit der beweglichen Struktur (11) verbunden ist, um die bewegliche Struktur (11) zwischen einer Direktstrahlposition und einer Umkehrstrahlposition zu bewegen,
**dadurch gekennzeichnet, dass**:
das Stellglied (2) ferner durch eine dritte Verbindung (P3), die in Längsrichtung zwischen der ersten Verbindung (P1) und der zweiten Verbindung (P2) angeordnet ist, mit der festen Struktur (10) verbunden ist,
die Achse (A3) der dritten Verbindung (P3) radial exzentrisch von der Hauptachse (A1) ist und die dritte Verbindung (P3) eine vorbestimmte Verschiebung des Stellglieds (2) in Bezug auf die feste Struktur (10) gestattet.

2. Schubumkehrer (1) nach dem vorhergehenden Anspruch, **dadurch gekennzeichnet, dass** die dritte Verbindung (P3) komplementäre Verbindungselemente (4, 5) zwischen dem Stellglied (2) und der festen Struktur (10) umfasst.

3. Schubumkehrer (1) nach dem vorhergehenden Anspruch, **dadurch gekennzeichnet, dass** die komplementären Verbindungselemente (4, 5) einen Stift (50) und eine Öffnung (40) umfassen, wobei der Stift (50) zumindest teilweise in der Öffnung (40) untergebracht ist.

4. Schubumkehrer (1) nach dem vorhergehenden Anspruch, **dadurch gekennzeichnet, dass** zwischen der Öffnung (40) und dem Stift (50) ein radiales Spiel (7) ausgebildet ist.

5. Schubumkehrer (1) nach einem der Ansprüche 3 oder 4, **dadurch gekennzeichnet, dass** die Öffnung (40) und der Stift (50) pressgepasst sind.

6. Schubumkehrer (1) nach einem der Ansprüche 3 bis 5, **dadurch gekennzeichnet, dass** zwischen der Öffnung (40) und dem Stift (50) ein elastischer Dämpfer (8) positioniert ist.

7. Schubumkehrer (1) nach einem der Ansprüche 3 bis 6, **dadurch gekennzeichnet, dass** der Stift (50) parallel zur Hauptachse (A1) des Stellglieds (2) ausgerichtet ist.

8. Schubumkehrer (1) nach einem der Ansprüche 2 bis 7, **dadurch gekennzeichnet, dass** das komplementäre Verbindungselement (4) der festen Struktur (10) von einer Ablenkeinrichtung (15) oder einer Trägerstruktur der Ablenkeinrichtung getragen wird.

9. Schubumkehrer (1) nach einem der Ansprüche 2 bis 7, **dadurch gekennzeichnet, dass** das komplementäre Verbindungselement (4) der festen Struktur (10) von einer externen Struktur (10a) der festen Struktur (10) getragen wird.

10. Schubumkehrer (1) nach einem der Ansprüche 2 bis 9, **dadurch gekennzeichnet, dass** das Stellglied (2) einen Körper (20) und eine Stange (21) umfasst, wobei die Stange (21) von dem Körper (20) geführt wird, wobei das komplementäre Verbindungselement (5) des Stellglieds (2) von dem Körper (20) des Stellglieds (2) getragen wird.

11. Schubumkehrer (1) nach einem der Ansprüche 2 bis 10, **dadurch gekennzeichnet, dass** die komplementären Verbindungselemente (4, 5) der festen Struktur (10) und des Stellglieds (2) jeweils eine ebene Oberfläche (42', 5') umfassen, die durch ein axiales Spiel (9) voneinander beabstandet sind.

12. Schubumkehrer (1) nach dem vorhergehenden Anspruch, **dadurch gekennzeichnet, dass** die ebene Oberfläche (5') des komplementären Verbindungselements (5) des Stellglieds (2) durch eine Auskragung (5) des Körpers (20) des Stellglieds (2) ausgebildet ist.

13. Schubumkehrer (1) nach Anspruch 11, **dadurch gekennzeichnet, dass** die ebene Oberfläche (5') des komplementären Verbindungselements (5) des Stellglieds (2) durch zwei Auskragungen (5) ausgebildet ist, die sich vom Körper (20) des Stellglieds (2) erstrecken, und die ebene Oberfläche (42') des komplementären Verbindungselements (4) der festen Struktur (10) durch zwei Vorsprünge (4) in Übereinstimmung mit den Auskragungen (5) ausgebildet ist.

14. Schubumkehrer (1) nach einem der Ansprüche 11 bis 13, **dadurch gekennzeichnet, dass** die ebene Oberfläche (42') des komplementären Verbindungselements (4) der festen Struktur (10) durch eine radiale Wand (42) ausgebildet ist.

15. Gondel für ein Flugzeug, umfassend einen Schubumkehrer (1) nach einem der vorhergehenden Ansprüche.

## Claims

1. A thrust reverser (1) for a turbojet aircraft nacelle comprising:
- a fixed structure (10),
- a movable structure (11),
- an actuator (2) extending along a main axis (A1) and connected by a first connection (P1) to the fixed structure (10) and by a second connection (P2) to the movable structure (11) for the deployment of the movable structure (11) between a direct jet position and a reverse jet position,
**characterized in that**:
the actuator (2) is further connected to the fixed structure (10) by a third connection (P3) disposed longitudinally between the first connection (P1) and the second connection (P2),
the axis (A3) of the third connection (P3) is radially eccentric from said main axis (A1), and **in that** the third connection (P3) allows a predetermined displacement of the actuator (2) with respect to the fixed structure (10).

2. The thrust reverser (1) according to the preceding claim, **characterized in that** the third connection (P3) comprises complementary connection elements (4, 5) between the actuator (2) and the fixed structure (10).

3. The thrust reverser (1) according to the preceding claim, **characterized in that** the complementary connection elements (4, 5) comprise a pin (50) and an opening (40), the pin (50) being at least partly housed in the opening (40).

4. The thrust reverser (1) according to the preceding claim, **characterized in that** a radial clearance (7) is formed between the opening (40) and the pin (50).

5. The thrust reverser (1) according to any one of claims 3 or 4, **characterized in that** the opening (40) and the pin (50) are press fitted.

6. The thrust reverser (1) according to any one of claims 3 to 5, **characterized in that** an elastic damper (8) is positioned between the opening (40) and the pin (50).

7. The thrust reverser (1) according to any one of claims 3 to 6, **characterized in that** the pin (50) is oriented parallel to the main axis (A1) of the actuator (2).

8. The thrust reverser (1) according to any one of claims 2 to 7, **characterized in that** the complementary connection element (4) of the fixed structure (10) is carried by a deflection means (15) or a support structure of the deflection means.

9. The thrust reverser (1) according to any one of claims 2 to 7, **characterized in that** the complementary connection element (4) of the fixed structure (10) is carried by an external structure (10a) of the fixed structure (10).

10. The thrust reverser (1) according to any one of claims 2 to 9, **characterized in that** the actuator (2) comprises a body (20) and a rod (21), the rod (21) being guided by the body (20), the complementary connection element (5) of the actuator (2) being carried by the body (20) of the actuator (2).

11. The thrust reverser (1) according to any one of claims 2 to 10, **characterized in that** the complementary connection elements (4, 5) of the fixed structure (10) and of the actuator (2) respectively comprise a flat surface (42', 5') spaced apart from each other by an axial clearance (9).

12. The thrust reverser (1) according to the preceding claim, **characterized in that** the flat surface (5') of the complementary connection element (5) of the actuator (2) is formed by a projection (5) of the body (20) of the actuator (2).

13. The thrust reverser (1) according to claim 11, **characterized in that** the flat surface (5') of the complementary connection element (5) of the actuator (2) is formed by two projections (5) extending from the body (20) of the actuator (2) and the flat surface (42') of the complementary connection element (4) of the fixed structure (10) is formed by two protrusions (4) corresponding to said projections (5).

14. The thrust reverser (1) according to any one of claims 11 to 13, **characterized in that** the flat surface (42') of the complementary connection element (4) of the fixed structure (10) is formed by a radial wall (42).

15. A nacelle for aircraft comprising a thrust reverser (1) according to any one of the preceding claims.
